# EUROPEAN PATENT SPECIFICATION

(11) **EP 2 169 363 B1**
(45) Date of publication and mention of the grant of the patent: **04.05.2011**
(21) Application number: 09171526.8
(22) Date of filing: 28.09.2009
(51) Int. Cl.: G01F 23/24

(54) **Fluid level sensing apparatus mount structure**
Montierstruktur für ein Flüssigkeitsstandmesssystem
Structure de montage d'appareil de détection de niveau de fluide

(30) Priority: 29.09.2008 JP 2008251698
(43) Date of publication of application: 31.03.2010
(73) Proprietor: Keihin Corporation, Tokyo 163-0539 (JP)
(72) Inventor: Maeshima, Takayuki, Kanagawa 211-8580 (JP)
(74) Representative: Prechtel, Jörg

(56) References cited:
- US-A1- 2007 095 332
- US-A1- 2008 041 152

## Description

### TECHNICAL FIELD

The present invention relates to a fluid level sensing apparatus mount structure, and in particular to a fluid level sensing apparatus mount structure for mounting a fluid level sensing apparatus such as a thermistor disposed in a fuel tank.

### BACKGROUND ART

There has been conventionally known a fuel supply apparatus for a two-wheel vehicle in which a pump holder that holds a fuel pump is attached to a cover member, and a filter is provided at the inlet of the fuel pump. This fuel supply apparatus is inserted into a fuel tank of a two-wheel vehicle through an opening provided on the lower or bottom portion of the fuel tank so that the fuel pump and the filter is located in the fuel tank. Then the opening of the fuel tank is closed by the cover member, whereby the fuel supply apparatus is mounted.

Fuel stored in the fuel tank is sucked and pressurized by the fuel pump, after foreign matters contained in the fuel have been removed by the filter. The pressurized fuel is supplied to a fuel injection valve of the engine through a fuel supply pipe etc.

With this fuel supply apparatus, a fluid level sensing apparatus, which includes, for example, a thermistor is provided to sense the fluid level of the fuel remaining in the fuel tank. As a mount structure for the fluid level sensing apparatus, there has been disclosed a structure in which a holder is attached to a thermistor supporting piece, and the thermistor is fixedly attached to the holder by, for example, welding, and an earth cable is directly connected to the housing of the thermistor by soldering (see, for example, Japanese Patent Application Laid-Open No. 2004-308602).

There has been disclosed another mount structure for fluid level sensing apparatus in which the thermistor is held by a holder made of an elastically deformable resin by its elastic force, and the thermistor is grounded through an electrically conductive spring (see, for example, Japanese Patent Application Laid-Open. No. 2007-126981).

The mount structure for fluid level sensing apparatus disclosed in the aforementioned Japanese Patent Application Laid-Open No. 2004-308602 has a disadvantage that the vertical position or the level of the fluid level sensing apparatus is not adjustable. Furthermore, direct soldering of the earth cable to the housing of the thermistor may invite a brake of wiring inside the housing due to heat generated upon soldering, which can lead to failure that impairs the sensing. In order to prevent this from occurring, it is necessary to control the temperature and the time of soldering strictly, which requires a very difficult process control.

In the mount structure for fluid level sensing apparatus disclosed in Japanese Patent Application Laid-Open. No. 2007-126981, it is possible to adjust the level of the fluid level sensing apparatus. However, in this structure, since the thermistor is fixed only by an elastic force of the holder, the force of holding the thermistor may be weakened in the case where the holder is made of a resin, due to swelling of the resin. Furthermore, since the thermistor is grounded by a spring, it is needed to arrange the spring, the thermistor housing, and the lead wire in the mentioned order from bottom to top, and the thermistor cannot be mounted in the reverse orientation. This disadvantageously limits the mounting orientation of the thermistor. In addition, in cases where the holder is made of an electrically conductive material to provide grounding through the holder, a limitation is placed on the material of the holder. This leads to a decrease in the degree of freedom of design, and use of an electrically conductive resin leads to an increase in the material cost.

### DISCLOSURE OF THE INVENTION

The present invention has been made in view of the above-described problems. An object of the present invention is to provide a fluid level sensing apparatus mount structure in which the level (or vertical position) of the apparatus can easily be adjusted, and that is inexpensive and can easily mount the fluid level sensing apparatus.

According to a first aspect of the present invention, there is provided a fluid level sensing apparatus mount structure for mounting a fluid level sensing apparatus to be disposed in a fuel tank, comprising:
a fluid level sensing apparatus mount portion having a plurality of groove portions with which a flange portion provided on the fluid level sensing apparatus is to engage, the groove portions being provided at different vertical positions on the fluid level sensing apparatus mount portion;
a first engagement portion provided on the fluid level sensing apparatus mount portion;
an electrically conductive holding member provided with an elastic portion that elastically holds the fluid level sensing apparatus, the holding member being connected with an earth cable; and
a second engagement portion provided on the holding member and engaging with the first engagement portion,
wherein the fluid level sensing apparatus mount structure is adapted to mount the fluid level sensing apparatus at a certain vertical position by engagement of the flange portion of the fluid level sensing apparatus with the groove portion at a specific vertical position and engagement of the second engagement portion of the holding member with the first engagement portion.

According to a second aspect of the present invention, in the fluid level sensing apparatus mount structure according to the first aspect, a plurality of first engagement portions like said first engagement portion are provided at different positions with respect to the vertical direction.

According to a third aspect of the present invention, in the fluid level sensing apparatus mount structure according to the first or second aspect, a plurality of flange engagement portions with which the flange portion is to engage is provided on the holding member, and the elastic portion is adapted to elastically hold the fluid level sensing apparatus, no matter with which flange engagement portion among the flange engagement portions the flange portion of the liquid level sensing apparatus engages.

According to a fourth aspect of the present invention, in the fluid level sensing apparatus mount structure according to any one of the first to third aspects, the holding member is provided with a terminal protection portion that surrounds a terminal portion of the fluid level sensing apparatus.

According to the first aspect of the present invention, the fluid level sensing apparatus mount structure is adapted to mount the fluid level sensing apparatus at a certain vertical position by engagement of the flange portion of the fluid level sensing apparatus with the groove portion at a specific vertical position on the fluid level sensing apparatus mount portion and engagement of the second engagement portion of the holding member with the first engagement portion. Therefore, the fluid level sensing apparatus can be retained at a specific vertical position easily. Furthermore, since the holding member provides grounding, the fluid level sensing apparatus mount portion need not be made of an electrically conductive material. Therefore, the material cost can be reduced, and this structure can be manufactured at low cost. Furthermore, the level or the vertical position of the fluid level sensing apparatus is adjusted by fitting the flange portion of the fluid level sensing apparatus in a groove portion at a certain vertical position on the fluid sensing apparatus mount portion, and the fluid level sensing apparatus can be attached in either the upward or downward orientation. In consequence, the sensing position of the fluid level sensing apparatus can be changed among a larger number of positions than the number of groove portions.

According to the second aspect of the present invention, a plurality of first engagement portions are provided at different positions with respect to the vertical direction. Therefore, when the flange portion of the fluid sensing apparatus is brought into engagement with a groove portion at a certain height position on the fluid level sensing apparatus mount portion, the fluid level sensing apparatus can be retained easily at this vertical position by causing the second engagement portion to engage with the corresponding first engagement portion.

According to the third aspect of the present invention, a plurality of flange engagement portions with which the flange portion is to engage is provided on the holding member, and the elastic portion is adapted to elastically hold the fluid level sensing apparatus, no matter with which flange engagement portion among the flange engagement portions the flange portion of the liquid level sensing apparatus engages. Therefore, when the flange portion of the fluid level sensing apparatus is brought into engagement with any one of the groove portions of the fluid level sensing apparatus mount portion, the flange portion of the fluid level sensing apparatus can engage with the corresponding flange engagement portion of the holding member. Thus, the fluid level sensing apparatus can be held at one of the different levels with only one first engagement portion.

According to the fourth aspect of the present invention, the holding member is provided with a terminal protection portion that surrounds a terminal portion of the fluid level sensing apparatus. Therefore, the terminal portion of the fluid level sensing apparatus can surely be protected against the exertion of external forces, whereby a break of the terminal portion of the fluid level sensing apparatus can surely be prevented from occurring.

### BRIEF DESCRIPTION OF THE DRAWINGS

Fig. 1 is a perspective view of a fuel supply apparatus according to a first embodiment to which the fluid level sensing apparatus mount structure according to the present invention is applied.
Fig. 2 is a longitudinal cross sectional view of the fuel supply apparatus according to the first embodiment to which the fluid level sensing apparatus mount structure according to the present invention is applied.

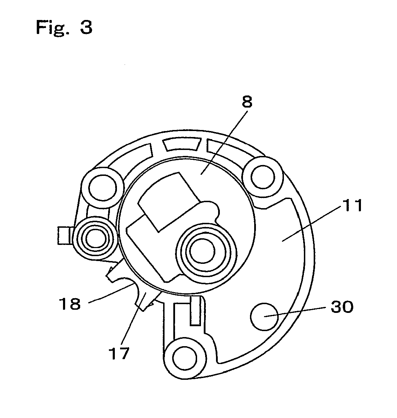

Fig. 3 is a plan view of a pump holder and a filter housing portion of the fuel supply apparatus according to the first embodiment to which the fluid level sensing apparatus mount structure according to the present invention is applied.

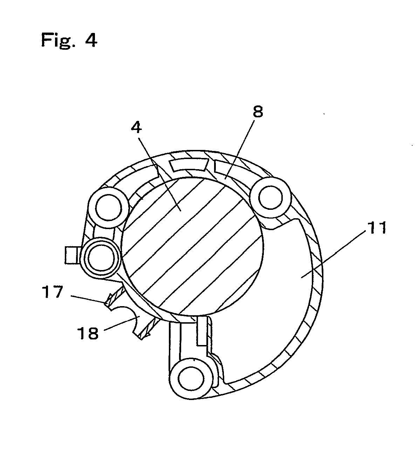

Fig. 4 is a lateral cross sectional view of the pump and the filter housing portion of the fuel supply apparatus according to the first embodiment to which the fluid level sensing apparatus mount structure according to the present invention is applied.
Fig. 5 is an exploded perspective view showing details of a fluid level sensing apparatus mounting portion of the fluid level sensing apparatus mount structure according to the present invention.
Fig. 6 is a perspective view showing details of the fluid level sensing apparatus mounting portion of the fluid level sensing apparatus mount structure according to the present invention.
Fig. 7 is a perspective view showing details of a fluid level sensing apparatus mounting portion of the fluid level sensing apparatus mount structure according to a second embodiment of the present invention.

### THE BEST MODE FOR CARRYING OUT THE INVENTION

In the following, an embodiment of the present invention will be described with reference to the accompanying drawings.

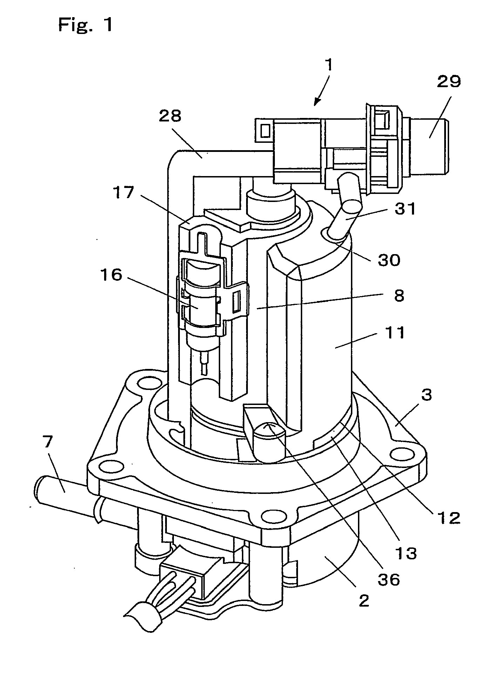

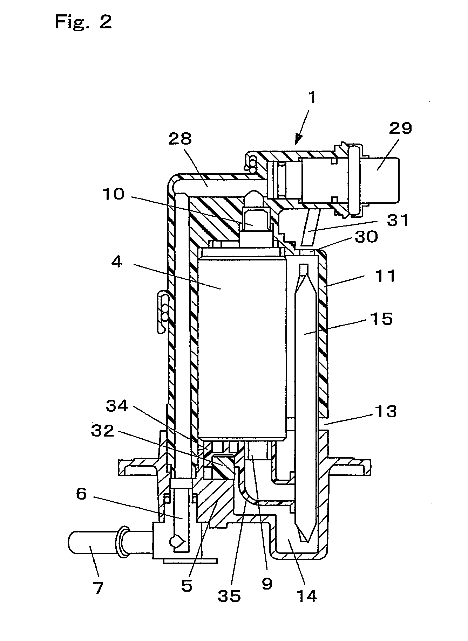

Figs. 1 and 2 show a first embodiment of a fuel supply apparatus to which the mount structure of the fluid level sensing apparatus according to the present invention is applied.

The fuel supply apparatus 1 according to this embodiment has a cover member 2 to be attached to the bottom of a fuel tank (not shown) of a two-wheel vehicle. The cover member 2 has a cylindrical shape with a closed bottom. The cover member 2 has a flange 3 that extends radially from the outer circumference thereof. The cover member 2 also has a pump support member 5 that protrudes from the inner bottom surface thereof. The pump support member 5 supports a fuel pump 4, which will be described later, from below. On one side of the cover member 2 is a fuel discharge channel 6 that extends along the axial direction. The upper end of the fuel discharge channel 6 opens on the upper end of the cover member 2, and the lower end thereof opens on the lower side surface of the cover member 2. To the lower opening of the fuel discharge channel 6 is connected a fuel discharge pipe 7 that extends substantially horizontally and outwardly from the lower portion of the side surface of the cover member 2.

The upper portion of the cover member 2 is designed in such a way that a pump holder 8 is mounted thereon. The pump holder 8 extends along the vertical direction and has a cylindrical shape with an inner diameter substantially equal to the outer diameter of the fuel pump 4. When the pump holder 8 is mounted, the center axis thereof is offset or decentered from the center axis of the cover member 2. The fuel pump 4 is housed in the pump holder 8 with its inlet (or suction) port 9 being located on the bottom and the outlet (or discharge) port 10 being located on the top.

On one side of the pump holder 8 is a filter housing portion 11 that extends in an arc-shape along the side wall of the cover member 2. The filter housing portion 11 is integral with the pump holder 8. In this embodiment, the filter housing portion 11 partly defines a filter housing space, and the housing space is closed by the side wall of the pump holder 8 on the pump holder side of the filter housing portion.

The lower edge of the filter housing portion 11 has a cut-away portion 12. In the state in which the pump holder 8 is joined to the cover member 2, the cut-away portion 12 provides a fuel supply port 13 through which fuel in the fuel tank flows into the housing space. The space defined below the pump holder 8, inside the filter housing portion 11, and inside the cover member 2 serves as a chamber 14. In the state in which the fuel supply apparatus 1 is mounted on the fuel tank, the interior of the chamber 14 is filled with fuel in the fuel tank supplied through the fuel supply port 13. The inlet port 9 of the fuel pump 4 is connected with a filter 15, which is housed inside the filter housing portion 11. The filter 15 extends from the upper portion of the filter housing portion 11 to the lower portion of the cover member 2. To the filter 15 is fixedly attached a joining portion 34 for joining with the fuel pump 4 and a fuel supply pipe 35 connected with the inlet port 9 of the fuel pump 4.

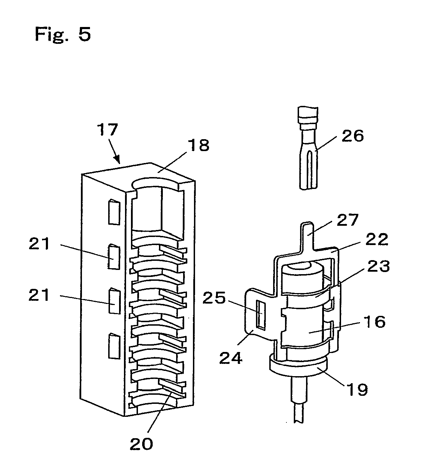

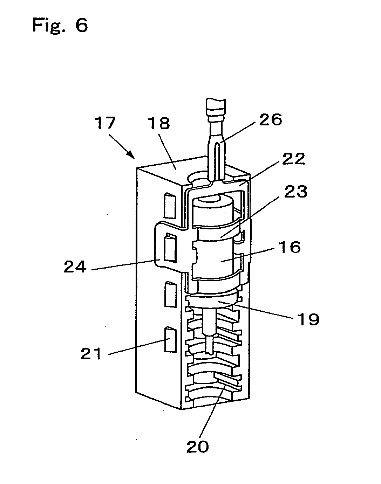

As shown in Figs. 5 and 6, a fluid level sensing apparatus mount portion 17 for mounting a thermistor 16 serving as a fluid level sensing apparatus is provided on a portion of the outer surface of the pump holder 8 on which the filter housing portion 11 is not provided. The fluid level sensing apparatus mount portion 17 includes an engagement support member 18 having an arc-shaped portion that fits with the outer surface of the thermistor 16 so that the outer surface of the thermistor 16 is to be in contact with the arc-shaped portion. The engagement support member 18 is provided with a plurality of groove portions 20 with which a flange portion 19 provided on the outer circumferential surface of the thermistor 16 is to engage. The groove portions 20 are arranged at substantially regular intervals along the vertical direction. On both side surfaces of the engagement support member 18 are provided a plurality of engagement projections 21 serving as the first engagement portions. The engagement projections are arranged at substantially regular intervals along the vertical direction. The fluid level sensing apparatus mount portion 17 also includes a holding member 22, which includes an elastic portion 23 that is made of an electrically conductive, elastic material such as a metal and curved along the outer circumferential surface of the thermistor 16. On both sides of the holding member 22 are respectively provided engagement pieces 24 extending on both sides of the engagement support member 18. Each engagement piece 24 has an engagement hole 25 serving as the second engagement portion to engage with one of the engagement projections 21 on the engagement support member 18. At the upper end of the holding member 22 is provided a earth terminal 27 projecting therefrom, to which the earth cable 26 is to be connected. In a state in which the flange portion 19 of the thermistor 16 is fitted to a certain groove portion 20 of the engagement support member 18 so that the thermistor 16 is located at a certain vertical position, the engagement hole 25 of the holding member 22 can engage with the engagement projection 21 corresponding to this vertical position, whereby the thermistor 16 can be held elastically by the elastic portion 23 of the holding member 22, and thermistor 16 can be held at the specific vertical position.

A fuel pipe 28 for fuel pumped out of the outlet port 10 of the fuel pump 4 extends horizontally in the upper portion of the pump holder 8. The fuel pipe 28 extends downwardly from one end of its horizontal portion, along the side wall of the pump holder 8. The fuel pipe 28 is adapted to be in communication with the fuel discharge channel 6 of the cover member 2 at its lower end. In this embodiment, the aforementioned pump holder 8, the filter housing portion 11, and the fuel pipe 28 are integrally molded and made of a resin.

At the other end of the fuel pipe 28, a pressure regulating valve 29 that regulates the pressure of fuel supplied from the fuel pump 4 is provided. A return opening 30 is provided on the top wall of the filter housing portion 11. A return pipe 31 is provided to return the fuel overflowing out of the pressure regulating valve 29 to the return opening 30 of the filter housing portion 11. The end of the return pipe 31 is spaced apart from the return opening 30 and directed toward the return opening 30.

The fuel supply pipe 35 of the filter 15 is connected to the inlet port 9 of the fuel pump 4, and the filter 15 is attached to the fuel pump 4 by the joining portion 34. Thereafter, the pump 4 is inserted into the pump holder 8, and then they are assembled onto the upper portion of the cover member 2 with the filter 15 being housed in the filter housing portion 11 and secured by a screw 36. In this state, the bottom wall of the fuel pump 4 is supported by the pump support member 5 with the joining portion 34 of the filter 15 and an insulator 32 between. Furthermore, the lower end of the fuel pipe 28 is brought into communication with the fuel discharge channel 6, and the chamber 14 is defined below the pump holder 8, inside the filter housing portion 11, and inside the cover member 2.

The fuel supply apparatus 1 having the above-described structure is attached on the bottom of the fuel tank in such a way that the pump holder 8 is inserted into the interior of the fuel tank, and the fuel discharge pipe 7 is connected to the fuel injection apparatus of the engine via a pipe that is not shown in the drawings.

In the following, the operation of the apparatus according to this embodiment will be described.

Fuel stored in the fuel tank is first flows into the chamber 14 through the fuel supply port 13. While the engine is not running, the fuel pump 4 is not in operation, and fuel is not supplied from the fuel pump 4 to the fuel pipe 28.

When engine starts to run, the fuel pump 4 is driven, whereby fuel stored in the chamber 14 is drawn through the inlet port 9 of the fuel pump 4 via the fuel supply pipe 35 after filtered by the filter 15, and pressurized fuel is discharged to the fuel pipe 28 through the outlet port 10. The pressure of fuel in the fuel pipe 28 is regulated by the pressure regulating valve 29, and the fuel is supplied to the fuel injection valve of the engine through the fuel pipe 28, the fuel discharge channel 6, and the fuel discharge pipe 7.

The return fuel that has overflowed in pressure regulation by the pressure regulating valve 29 is discharged toward the return opening 30 of the filter housing portion 11 through the return pipe 31. Since the end of the return pipe 31 is spaced apart from the return opening 30, a portion of the return fuel returns into the interior of the filter housing portion 11 through the return opening 30, and a portion of the return fuel is discharged into the interior of the fuel tank through the gap between the end of the return pipe 31 and the return opening 30. Thus, a portion of the vapor contained in the return fuel is discharged into the interior of the fuel tank, and the amount of the vapor returning into the interior of the filter housing portion 11 or the interior of the chamber 14 can be reduced. Vapor generated in the interior of the chamber 14 tends to go up to the upper portion in the interior of the filter housing portion 11. Since the return opening 30 is provided on the top wall of the filter housing portion 11, the vapor gathering in the interior of the filter housing portion 11 can be efficiently discharged through the return opening 30 into the interior of the fuel tank.

In the case where the fuel tank equipped with the fuel supply apparatus 1 is mounted on a two-wheel vehicle, when the quantity of fuel remaining in the fuel tank is small and the fuel level in the fuel tank is greatly inclined as is the case during climbing or during a wheelie, the quantity of fuel supplied to the fuel pump 4 may decrease. In this embodiment, a chamber 14 is defined below the pump holder 8, inside the filter housing portion 11, and inside the cover member 2, and a certain quantity of fuel can be kept in the interior of the chamber 14. The vehicle can surely be prevented from running out of fuel.

As described above, in the apparatus according to this embodiment, in a state in which the flange portion 19 of the thermistor 16 is fitted in a groove portion 20 of a specific level, the engagement hole 25 of the holding member 22 is brought into engagement with the engagement projection 21 corresponding to this level, whereby the thermistor 16 can be elastically held by the elastic portion 23 of the holding member 22. Thus, the thermistor 16 can be held at a specific vertical position easily. In addition, since the holding member 22 provides grounding, the fluid level sensing apparatus mount portion 17 need not be made of an electrically conductive material. Therefore, the material cost can be reduced, and the apparatus can be manufactured at low cost. Furthermore, the level or the vertical position of the thermistor 16 is adjusted by fitting the flange portion 19 of the thermistor 16 in a groove portion 20 at a certain level on the fluid sensing apparatus mount portion 17, and the thermistor 16 can be attached in either the upward or downward orientation. In consequence, the sensing position of the thermistor 16 can be changed among a larger number of positions than the number of groove portions 20.

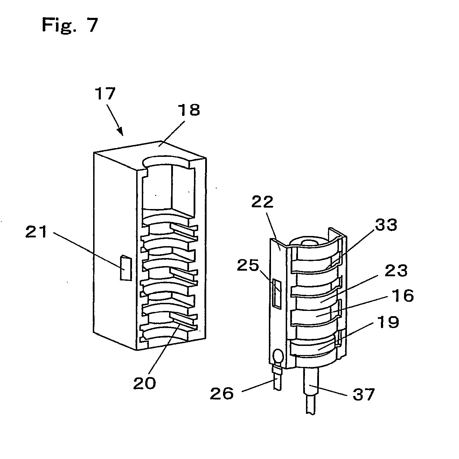

Fig. 7 shows an apparatus according to a second embodiment of the present invention. In this embodiment, a holding member 22 made of an electrically conductive material such as a metal is provided with a plurality of flange engagement portions 33 with which the flange portion 19 of the thermistor 16 is to engage. The flange engagement portions 33 are provided at the positions aligned with the groove portions 20 of the fluid level sensing apparatus mount portion 17 respectively. An earth cable 26 is connected to the holding member 22. On each of the side surfaces of the fluid level sensing apparatus mount portion 17 is provided an engagement projection 21 serving as the first engagement portion. In this embodiment, furthermore, the elastic portion 23 of the holding member 22 is adapted to serve as a lead wire protector that protects the lead wire 37 of the thermistor 16.

The components of the apparatus according to the second embodiment other than described above are the same as those in the apparatus according to the first embodiment. The same components are denoted by the same reference signs, and they will not be described further.

In this embodiment, in a state in which the flange portion 19 of the thermistor 16 is fitted in a specific groove portion 20 on the engagement support portion 18 so that the thermistor 16 is located at a specific level, the engagement hole 25 of the holding member 22 is brought into engagement with the engagement projection 21, whereby the flange portion 19 of the thermistor 16 comes into engagement with the flange engagement portion 33 of a specific level on the holding member 22, whereby the thermistor 16 is elastically held by the elastic portion 23 of the holding member 22. In this embodiment, since the holding member 22 is provided with the flange engagement portions 33, when the flange portion 19 of the thermistor 16 is fitted in one of the groove portions 20 of the fluid level sensing apparatus mount portion 17, the flange 19 of the thermistor 16 can be brought into engagement with the corresponding flange engagement portion 33 of the holding member 22. Therefore, the thermistor 16 can be held at one of the different levels with only one engagement projection 21.

In addition, the elastic portion 23 of the holding member 22 is adapted to serve as the lead wire protector that protects the lead wire 37 of the thermistor 16. Therefore, in the state in which the flange portion 19 of the thermistor 16 is in engagement with the lowest flange engagement portion 33 as shown in Fig. 7, the lead wire 37 of the thermistor 16 can be protected by the elastic portion 23 located below this flange engagement portion 33, against external forces. On the other hand, in the case where the flange portion 19 of the thermistor 16 is in engagement with an upper flange engagement portion 33, the entire part of the elastic portion 23 that is located below the flange portion 19 in engagement serves as the lead wire protector. Thus, the lead wire 37 of the thermistor 16 can be protected against external forces in a similar manner.

As described above, in this embodiment also, the engagement hole 25 of the holding member 22 is brought into engagement with the engagement projection 21 in a state in which the flange portion 19 of the thermistor 16 is fitted in a specific groove portion 20 of a specific level on the engagement support member 18, whereby the thermistor 16 is elastically held by the elastic portion 23 of the holding member 22, as with the above-described first embodiment. Thus, the thermistor can easily be held at a specific level. In addition, since the holding member 22 provides grounding, the fluid level sensing apparatus mount portion need not be made of an electrically conductive material. Therefore, the material cost can be reduced, and the apparatus can be manufactured at low cost.

Furthermore, since the elastic portion 23 of the holding member 22 is adapted to serve as a lead wire protector that protects the lead wire 37 of the thermistor 16, the terminal of the fluid level sensing apparatus can surely be protected against the exertion of external forces, whereby a break of the terminal of the fluid sensing apparatus can surely be prevented from occurring.

The present invention is not limited to the embodiments described in the foregoing, and various modification can be made thereto without departing from the scope of the present invention.

The invention provides a fluid level sensing apparatus mount structure in which the level of the apparatus can easily be adjusted, and that is inexpensive and can easily mount the fluid level sensing apparatus. The mount structure includes a fluid level sensing apparatus mount portion 17 having a plurality of groove portions 20 to which a flange portion 19 provided on a thermistor 16 is to engage, the groove portions being provided at different vertical positions on the fluid level sensing apparatus mount portion, an engagement projection 21 provided on the fluid level sensing apparatus mount portion 17, an electrically conductive holding member 22 provided with an elastic portion 23 that elastically holds the thermistor 16, the holding member 22 being connected with an earth cable 26, and an engagement hole 25 provided on the holding member 22 and engaging with the

## Claims

1. A fluid level sensing apparatus mount structure for mounting a fluid level sensing apparatus to be disposed in a fuel tank, comprising:
a fluid level sensing apparatus mount portion (17) having a plurality of groove portions (20) with which a flange portion (19) provided on said fluid level sensing apparatus is to engage, the groove portions being provided at different vertical positions on said fluid level sensing apparatus mount portion;
a first engagement portion (21) provided on said fluid level sensing apparatus mount portion;
an electrically conductive holding member (22) provided with an elastic portion (23) that elastically holds said fluid level sensing apparatus, said holding member being connected with an earth cable; and
a second engagement portion (24) provided on said holding member and engaging with said first engagement portion,
wherein the fluid level sensing apparatus mount structure is adapted to mount said fluid level sensing apparatus at a certain vertical position by engagement of said flange portion of said fluid level sensing apparatus with said groove portion at a specific vertical position and engagement of said second engagement portion of said holding member with said first engagement portion.

2. A fluid level sensing apparatus mount structure according to claim 1, wherein a plurality of first engagement portions like said first engagement portion are provided at different positions with respect to the vertical direction.

3. A fluid level sensing apparatus mount structure according to claim 1 or 2, a plurality of flange engagement portions with which said flange portion is to engage is provided on said holding member, and said elastic portion is adapted to elastically hold said fluid level sensing apparatus, no matter with which flange engagement portion among said flange engagement portions said flange portion of said liquid level sensing apparatus engages.

4. A fluid level sensing apparatus mount structure according to any one of claims 1 to 3, said holding member is provided with a terminal protection portion that surrounds a terminal portion of said fluid level sensing apparatus.

## Patentansprüche

1. Flüssigkeitsstandsmessvorrichtung-Befestigungsstruktur zum Befestigen einer Flüssigkeitsstandsmessvorrichtung, die in einem Kraftstofftank anzuordnen ist, umfassend:
- einen Flüssigkeitsstandsmessvorrichtung-Befestigungsabschnitt (17) mit einer Mehrzahl von Nutabschnitten (20), mit welchen ein Flanschabschnitt (19), der an der Flüssigkeitsstandsmessvorrichtung vorgesehen ist, in Eingriff zu bringen ist, wobei die Nutabschnitte an verschiedenen vertikalen Positionen an dem Flüssigkeitsstandsmessvorrichtung-Befestigungsabschnitt vorgesehen sind,
- einen ersten Eingriffsabschnitt (21), der an dem Flüssigkeitsstandsmessvorrichtung-Befestigungsabschnitt vorgesehen ist,
- ein elektrisch leitendes Halterelement (22), das mit einem elastischen Abschnitt (23) vorgesehen ist, welcher die Flüssigkeitsstandsmessvorrichtung elastisch hält, wobei das Halterelement mit einem Erdungskabel verbunden ist, und
- einen zweiten Eingriffsabschnitt (24), der an dem Halterelement vorgesehen ist und mit dem ersten Eingriffsabschnitt in Eingriff steht,
wobei die Flüssigkeitsstandsmessvorrichtung-Befestigungsstruktur angepasst ist, die Flüssigkeitsstandsmessvorrichtung an einer bestimmten vertikalen Position zu befestigten, durch Eingriff des Flanschabschnitts der Flüssigkeitsstandsmessvorrichtung mit dem Nutabschnitt an einer spezifischen vertikalen Position und durch Eingriff des zweiten Eingriffsabschnitts des Halterelements mit dem ersten Eingriffsabschnitt.

2. Flüssigkeitsstandsmessvorrichtung-Befestigungsstruktur nach Anspruch 1, wobei eine Mehrzahl von ersten Eingriffsabschnitten, wie der erste Eingriffsabschnitt, an verschiedenen Positionen hinsichtlich der vertikalen Richtung vorgesehen sind.

3. Flüssigkeitsstandsmessvorrichtung-Befestigungsstruktur nach Anspruch 1 oder 2, wobei eine Mehrzahl von Flanscheingriffsabschnitten, mit welchen der Flanschabschnitt in Eingriff zu bringen ist, an dem Halterelement vorgesehen ist, und wobei der elastische Abschnitt angepasst ist, die Flüssigkeitsstandsmessvorrichtung elastisch zu halten, unabhängig davon, mit welchem Flanscheingriffsabschnitt unter den Flanscheingriffsabschnitten der Flanschabschnitt der Flüssigkeitsstandsmessvorrichtung in Eingriff steht.

4. Flüssigkeitsstandsmessvorrichtung-Befestigungsstruktur nach einem der Ansprüche 1 bis 3, wobei das Halterelement mit einem Anschluss-Schutzabschnitt versehen ist, welcher einen Anschlussabschnitt der Flüssigkeitsstandsmessvorrichtung umgibt.

## Revendications

1. Structure de montage d'appareil de détection de niveau de fluide, dévolue au montage d'un appareil détecteur de niveau de fluide conçu pour être placé dans un réservoir de carburant, comprenant :
une partie (17) de montage d'un appareil détecteur de niveau de fluide, présentant une pluralité de zones rainurées (20) avec lesquelles doit venir coopérer une zone (19) formant collerette, prévue sur ledit appareil détecteur de niveau de fluide, lesdites zones rainurées étant ménagées en différentes emplacements verticaux, sur ladite partie de montage de l'appareil détecteur de niveau de fluide ;
une première zone (21) de venue en prise, prévue sur ladite partie de montage de l'appareil détecteur de niveau de fluide ;
une pièce de retenue (22) électriquement conductrice, pourvue d'une région élastique (23) retenant élastiquement ledit appareil détecteur de niveau de fluide, ladite pièce de retenue étant connectée à un câble de mise à la terre ; et
une seconde zone (24) de venue en prise, prévue sur ladite pièce de retenue et venant coopérer avec ladite première zone de venue en prise,
ladite structure de montage d'appareil de détection de niveau de fluide étant conçue pour monter ledit appareil détecteur de niveau de fluide dans une certaine position verticale par coopération, en un emplacement vertical spécifique, entre ladite zone formant collerette sur ledit appareil détecteur de niveau de fluide et ladite zone rainurée ; et par coopération entre ladite seconde zone de venue en prise de ladite pièce de retenue et ladite première zone de venue en prise.

2. Structure de montage d'appareil de détection de niveau de fluide, selon la revendication 1, dans laquelle une pluralité de premières zones de venue en prise, offrant une similitude avec ladite première zone de venue en prise, sont prévues en des emplacements différents par rapport à la direction verticale.

3. Structure de montage d'appareil de détection de niveau de fluide, selon la revendication 1 ou 2, une pluralité de régions d'engagement d'une collerette, avec lesquelles ladite zone formant collerette est destinée à venir coopérer, étant prévues sur ladite pièce de retenue ; et ladite région élastique étant conçue pour retenir élastiquement ledit appareil détecteur de niveau de fluide, quelle que soit la région d'engagement d'une collerette avec laquelle ladite zone formant collerette dudit appareil détecteur de niveau de fluide vient coopérer, au sein desdites régions d'engagement d'une collerette.

4. Structure de montage d'appareil de détection de niveau de fluide, selon l'une quelconque des revendications 1 à 3, ladite pièce de retenue étant dotée d'une partie extrême de protection, qui entoure une partie extrême dudit appareil détecteur de niveau de fluide.
